# EUROPÄISCHE PATENTSCHRIFT

(11) **EP 2 697 695 B1**
(45) Veröffentlichungstag und Bekanntmachung des Hinweises auf die Patenterteilung: **08.05.2019**
(21) Anmeldenummer: 12727342.3
(22) Anmeldetag: 01.06.2012
(51) Int. Cl.: F03D 7/04, G05B 13/04, G05B 23/02, G06N 3/04, F03D 17/00, G05B 17/02

(54) **VERFAHREN ZUR RECHNERGESTÜTZTEN GENERIERUNG EINES DATENGETRIEBENEN MODELLS EINES TECHNISCHEN SYSTEMS, INSBESONDERE EINER GASTURBINE ODER WINDTURBINE**
METHOD FOR THE COMPUTER-SUPPORTED GENERATION OF A DATA-DRIVEN MODEL OF A TECHNICAL SYSTEM, IN PARTICULAR OF A GAS TURBINE OR WIND TURBINE
PROCÉDÉ POUR GÉNÉRER, DE MANIÈRE ASSISTÉE PAR ORDINATEUR, UN MODÈLE PILOTÉ PAR DES DONNÉES D'UN SYSTÈME TECHNIQUE, NOTAMMENT D'UNE TURBINE À GAZ OU D'UNE ÉOLIENNE

(30) Priorität: 03.06.2011 DE 102011076936
(43) Veröffentlichungstag der Anmeldung: 19.02.2014
(73) Patentinhaber: Siemens Aktiengesellschaft, 80333 München (DE)
(72) Erfinder: DÜLL, Siegmund, 81549 München (DE); HENTSCHEL, Alexander, 81929 München (DE); STERZING, Volkmar, 85579 Neubiberg (DE); UDLUFT, Steffen, 82223 Eichenau (DE)
(86) Internationale Anmeldenummer: PCT/EP2012/060400
(87) Internationale Veröffentlichungsnummer: WO 2012/164075

(56) Entgegenhaltungen:
- WO-A1-02/03041
- US-A- 5 335 291

## Beschreibung

Die Erfindung betrifft ein Verfahren zur rechnergestützten Generierung eines datengetriebenen Modells eines technischen Systems, insbesondere einer Gasturbine oder Windturbine, sowie ein entsprechendes Computerprogrammprodukt.

Zum automatischen Betrieb eines technischen Systems können datengetriebene Modelle eingesetzt werden, die basierend auf entsprechenden Trainingsdaten, welche Betriebsgrößen des technischen Systems darstellen, gelernt werden. Ein solches gelerntes datengetriebenes Modell soll dabei das Verhalten des technischen Systems widerspiegeln und kann anschließend zur Erstellung von Überwachungs- und/oder Regelungsmodellen des entsprechenden technischen Systems verwendet werden. Diese Überwachungs- bzw. Regelungsmodelle können dann im Realbetrieb des technischen Systems eingesetzt werden, um entsprechende Stellgrößen des Systems basierend auf den aktuellen Betriebsgrößen einzustellen bzw. Fehlbetriebszustände des technischen Systems automatisiert festzustellen.

In der Regel sind die Trainingsdaten, mit denen ein datengetriebenes Modell gelernt wird, im Zustandsraum der Betriebsgrößen des technischen Systems nicht gleichmäßig verteilt. Üblicherweise existieren dabei in Betriebsbereichen des technischen Systems, welche einen Normalbetrieb repräsentieren, wesentlich mehr Daten als in Grenzbereichen des Betriebs bzw. für Fehlbetriebszustände des technischen Systems. Diese Problematik tritt insbesondere bei der Steuerung von Gas- und Windturbinen auf, welche zur Vermeidung von Schädigungen in der Regel nicht in Grenzbereichen betrieben werden. Es existiert somit in häufig frequentierten Betriebsbereichen der Gasturbine bzw. Windturbine eine sehr große Menge an nutzbaren Trainingsdatensätzen, deren Informationsgehalt jedoch größtenteils redundant ist. Für selten angefahrene Betriebsmodi liegen hingegen wenige Daten vor.

Es existieren somit für die Trainingsdaten, die zum Lernen eines datengetriebenen Modells verwendet werden, Bereiche unterschiedlicher Datendichte. Üblicherweise wird diese Datendichte bei der Auswahl entsprechender Trainingsdaten und der darauf basierenden Generierung eines Modells des entsprechenden technischen Systems nicht berücksichtigt. Dies kann zur Folge haben, dass entsprechende Regelungs- und Überwachungsmodelle, welche basierend auf den datengetriebenen Modellen berechnet werden, im Betrieb des technischen Systems falsche bzw. suboptimale Regelungsaktionen oder falsche Warnungen ausgeben. So ist es beispielsweise möglich, dass Kaltwetterereignisse, die beim Betrieb einer Gas- bzw. Windturbine auftreten und in der Trainingsphase des datengetriebenen Modells nicht enthalten waren, zum Auslösen von Fehlalarmen führen. Ebenso kann ein datengetriebenes Modell, welches lediglich mit Trainingsdaten für typische Betriebszustände gelernt wird, zu erhöhten Modellfehlern führen, so dass ein darauf basierendes Regelungs- bzw. Steuerungsmodell im Realbetrieb des technischen Systems entsprechende Stellgrößen, wie z.B. die Menge an zugeführtem Gas bzw. die Stellung von Vorleitschaufeln in einer Gasturbine, nicht optimal einstellt. Dies kann zu einer Verringerung der Leistung bzw. des Wirkungsgrads bzw. der Lebensdauer des technischen Systems führen.

Herkömmlicherweise werden bei der Generierung eines datengetriebenen Modells eines technischen Systems nach der Beseitigung von Ausreißern oder Fehlern entweder alle Datensätze der Trainingsdaten oder eine zufällige Auswahl dieser Datensätze verwendet. Die Berücksichtigung von allen Trainingsdaten erzeugt eine sehr große und immer weiter wachsende Trainingsdatenmenge, welche die Generierung eines entsprechenden datengetriebenen Modells verlangsamt und zu Ressourcenproblemen des bzw. der Rechner führen kann, mit denen das datengetriebene Modell generiert wird (z.B. mangelnde Hauptspeichergröße). Die einfache Beschränkung auf eine zufällige Auswahl von Trainingsdatensätzen beschleunigt zwar die Berechnung des datengetriebenen Modells, erhöht jedoch das Risiko, dass relevante Informationen über das technische System verloren werden. Dieses Problem wird bei datengetriebenen Modellen, welche das dynamische Verhalten des technischen Systems repräsentieren, dadurch verstärkt, dass immer eine definierte Menge von zeitlich zusammenhängenden Datensätzen gemeinsam beim Lernen des Modells zu berücksichtigen ist.

US5335291 beschreibt ein Verfahren zur rechnergestützten Generierung eines Modells. Aufgabe der Erfindung ist es, ein Verfahren zur rechnergestützten Generierung eines datengetriebenen Modells zu schaffen, welches mit einer geringeren Menge an Rechenressourcen ein gutes datengetriebenes Modell eines technischen Systems erlernt.

Diese Aufgabe wird durch die unabhängigen Patentansprüche gelöst. Weiterbildungen der Erfindung sind in den abhängigen Ansprüchen definiert.

Das erfindungsgemäße Verfahren dient zur rechnergestützten Generierung eines datengetriebenen Modells eines technischen Systems und insbesondere einer Gasturbine oder Windturbine. Das datengetriebene Modell dient vorzugsweise zur Verwendung für automatisierte Überwachungs- und/oder Prognose- und/oder Regelungsaufgaben (MPC) in dem technischen System und wird basierend auf Trainingsdaten erstellt, welche eine Vielzahl von Datensätzen umfassen, welche jeweils eine Mehrzahl von Betriebsgrößen des technischen Systems repräsentieren. Unter einer Mehrzahl von Betriebsgrößen sind Messgrößen und ggf. auch Stellgrößen des technischen Systems zu verstehen. Die Messgrößen sind dabei Größen, die am oder in der Umgebung des technischen Systems über geeignete Sensoren ermittelt wurden oder aus Sensorwerten abgeleitet wurden. Stellgrößen sind solche Betriebsgrößen des technischen Systems, welche einstellbar bzw. variierbar sind, um hierdurch den Betrieb des technischen Systems zu beeinflussen.

Das erfindungsgemäße Verfahren läuft iterativ ab, wobei für eine Anzahl von Iterationsschritten jeweils das datengetriebene Modell und ein Dichteschätzer mittels Datensätzen aus den Trainingsdaten gelernt werden. Das nach Abschluss der Iteration gelernte datengetriebene Modell ist dann das mit dem erfindungsgemäßen Verfahren generierte datengetriebene Modell. Der (gelernte) Dichteschätzer gibt für Datensätze aus den Trainingsdaten jeweils ein Konfidenzmaß aus, welches um so höher ist, je größer die Ähnlichkeit eines jeweiligen Datensatzes zu anderen Datensätzen aus den Trainingsdaten ist. Die Ähnlichkeit der Datensätze wird in einer bevorzugten Ausführungsform über ein entsprechendes Abstandsmaß in dem Raum der durch die Datensätze repräsentierten Datenpunkte beschrieben. Der Dichteschätzer gibt dabei über sein Konfidenzmaß an, ob für einen entsprechenden Datensatz eine hohe Dichte im Datenraum und damit viele ähnliche Datensätze gemäß den Trainingsdaten vorliegen. Verfahren, mit denen der soeben beschriebene Dichteschätzer realisiert werden kann, sind hinlänglich aus dem Stand der Technik bekannt und werden deshalb nicht im Detail erläutert. In einer bevorzugten Ausführungsform wird als Dichteschätzer ein Verfahren verwendet, welches auf Neural Clouds basiert. Vorzugsweise wird dabei das Verfahren eingesetzt, welches in der Druckschrift [1] beschrieben ist. Der gesamte Offenbarungsinhalt dieser Druckschrift wird durch Verweis zum Inhalt der vorliegenden Anwendung gemacht.

Das im erfindungsgemäßen Verfahren in einem Iterationsschritt gelernte datengetriebene Modell dient dazu, Datensätze der Trainingsdaten zu reproduzieren. Hierbei tritt ein Modellfehler auf, der den Unterschied zwischen den reproduzierten Datensätzen und den tatsächlichen Datensätzen gemäß den Trainingsdaten darstellt. Dieser Modellfehler sollte bei einem qualitativ guten datengetriebenen Modell möglichst klein sein. Das datengetriebene Modell ist dabei insbesondere derart ausgestaltet, dass ein erster Teil der Betriebsgrößen der jeweiligen Datensätze der Trainingsdaten eine Eingabe des datengetriebenen Modells darstellt, wohingegen die Ausgabe des datengetriebenen Modells ein zweiter Teil von in den jeweiligen Datensätzen enthaltenen Betriebsgrößen ist. Der Modellfehler ist in diesem Fall durch den Unterschied zwischen dem zweiten Teil der Betriebsgrößen, die über das datengetriebene Modell ausgegeben werden, und dem entsprechenden zweiten Teil der Betriebsgrößen des entsprechenden Datensatzes der Trainingsdaten gegeben.

Im Rahmen des erfindungsgemäßen Verfahrens werden mittels des Dichteschätzers und des datengetriebenen Modells, die in einem jeweiligen Iterationsschritt gelernt wurden, Datensätze aus den Trainingsdaten für das Lernen im nächsten Iterationsschritt ausgewählt oder gewichtet, wobei Datensätze aus den Trainingsdaten mit niedrigen Konfidenzmaßen und hohen Modellfehlern eher ausgewählt oder höher gewichtet werden. Das heißt, ein Datensatz aus den Trainingsdaten, der bei gleichem Modellfehler ein niedrigeres Konfidenzmaß als ein anderer Datensatz aufweist, wird eher ausgewählt bzw. höher gewichtet als der andere Datensatz. Ebenso wird ein Datensatz, der bei gleichem Konfidenzmaß einen höheren Modellfehler als ein anderer Datensatz aufweist, bevorzugt ausgewählt bzw. höher gewichtet als der andere Datensatz.

Die Erfindung beruht auf der Erkenntnis, dass ein besonders effizientes Lernen eines datengetriebenen Modells eines technischen Systems dann erreicht wird, wenn Trainingsdaten verwendet werden, die einen hohen Grad an "Neuigkeit" aufweisen, d.h. deren Konfidenzmaß klein ist und für welche demzufolge wenig ähnliche Datensätze existieren. Ebenso sind für Lernverfahren diejenigen Bereiche der Trainingsdaten interessant, für welche das Modell noch fehlerhaft ist, d.h. für welche sich noch große Modellfehler ergeben. Durch die Modellierung eines geeigneten Zusammenhangs, bei dem die Datensätze mit niedrigen Konfidenzmaßen bzw. hohen Modellfehlern in einem neuen Iterationsschritt des Lernens stärker berücksichtigt werden, wird somit ein Lernen erreicht, welches eine recheneffiziente Generierung eines guten datengetriebenen Modells eines technischen Systems ermöglicht.

Mit dem erfindungsgemäßen Verfahren können die in großen Trainingsdatenmengen vorhandenen Zusammenhänge geeignet extrahiert werden und für die Modellierung des Verhaltens eines technischen Systems und insbesondere einer Gas- oder Windturbine genutzt werden. Eine gute Modellierung des entsprechenden technischen Systems wird dabei selbst dann ermöglicht, wenn die Datensätze der Trainingsdaten nur wenige Betriebsgrößen enthalten bzw. die Menge der Trainingsdaten über wenige Datensätze verteilt sind. Im erfindungsgemäßen Verfahren werden nur die wichtigen informationsrelevanten Datensätze bzw. Bereiche von Trainingsdaten genutzt, so dass das entsprechende Modell schnell und mit wenig Rechenressourcen erstellt werden kann. Ferner wird durch das erfindungsgemäße Verfahren die Perzentil-Performanz des generierten datengetriebenen Modells optimiert. Dies ist besonders dann von Vorteil, wenn das datengetriebene Modell im Rahmen einer rechnergestützten Steuerung oder Überwachung eines technischen Systems eingesetzt wird.

Das erfindungsgemäße Verfahren weist ferner den Vorteil auf, dass es einen gelernten Dichteschätzer liefert, der anschließend bei der Berechnung eines Steuerungs- und/oder Regelungsmodells bzw. Überwachungsmodells des technischen Systems integriert werden kann. Dabei liefert der Dichteschätzer, der im entsprechenden Steuerungs- bzw. Überwachungsmodell eingesetzt wird, Informationen über die Aussagekraft der aktuellen Betriebsgrößen des technischen Systems. Insbesondere können entsprechende Meldeschwellen oder Maximalwerte für Änderungen von Stellgrößen dynamisch angepasst werden. Auf diese Weise können Fehlalarme bei der Echtzeit-Überwachung von technischen Systemen und insbesondere Gas- oder Windturbinen vermieden werden. Ferner kann eine Autorisierung eines generierten datengetriebenen Modells von dem Konfidenzmaß und damit der Datendichte des entsprechenden Datensatzes der aktuellen Betriebsgrößen des technischen Systems abhängig gemacht werden, d.h. nur bei einer ausreichenden Datendichte wird der Betrieb des datengetriebenen Modells bzw. des technischen Systems aufgenommen bzw. fortgesetzt. Auf diese Weise können Stellgrößen-Einstellungen am technischen System vermieden werden, welche z.B. aufgrund einer zu großen Verbrennungsdynamik einer Gasturbine zu einer Schädigung des technischen Systems führen.

Mit dem durch das erfindungsgemäße Verfahren generierten datengetriebenen Modell kann insbesondere auch das dynamische (d.h. zeitabhängige) Verhalten eines technischen Systems modelliert werden. In diesem Fall umfasst ein Datensatz nicht nur Betriebsgrößen zum gleichen Zeitpunkt, sondern eine Folge von Betriebsgrößen zusammengehöriger Zeitpunkte entsprechend der Architektur des datengetriebenen Modells.

Mit dem erfindungsgemäßen Verfahren wird als datengetriebenes Modell vorzugsweise ein neuronales Netz und insbesondere ein rekurrentes neuronales Netz gelernt. Mit solchen rekurrenten neuronalen Netzen lässt sich sehr gut das Verhalten eines technischen Systems basierend auf entsprechenden Trainingsdaten reproduzieren. Das Lernen des neuronalen Netzes erfolgt vorzugsweise über ein an sich bekanntes Error-Backpropagation-Verfahren. In einer besonders bevorzugten Ausführungsform wird als neuronales Netz das in der Druckschrift DE 10 2010 011 221 A1 beschriebene Netz verwendet, welches auch als Markov-Entscheidungsprozess-Extraktions-Netzwerk bezeichnet wird.

Das erfindungsgemäße Verfahren eignet sich besonders gut zur Modellierung einer Gasturbine. Geeignete Messgrößen der Gasturbine, die als Betriebsgrößen des technischen Systems in den Datensätzen berücksichtigt werden, umfassen eine oder mehrere der folgenden Größen:
- die Temperatur in der Umgebung, in der die Gasturbine betrieben wird;
- die Luftfeuchtigkeit in der Umgebung, in der die Gasturbine betrieben wird;
- den Luftdruck in der Umgebung, in der die Gasturbine betrieben wird;
- die Leistung der Gasturbine, insbesondere ein prozentualer Leistungswert;
- die Brennstoffgüte der Gasturbine;
- die Schadstoffemission der Gasturbine, insbesondere die Emission von Stickoxiden und/oder Kohlenmonoxid;
- die Temperatur einer oder mehreren Turbinenschaufeln der Gasturbine;
- die Abgastemperatur der Gasturbine;
- die Verbrennungsdynamik der Gasturbine.

Der oben genannte Begriff der Verbrennungsdynamik betrifft dabei die mit geeigneten Sensoren erfassten Amplitudenwerte von Druckschwankungen in der Gasturbine.

Demgegenüber haben sich für eine Gasturbine eine oder mehrere der folgenden Stellgrößen als Betriebsgrößen in den Datensätzen als besonders geeignet erwiesen:
- die Stellung von einer oder mehreren Leitschaufeln in der Gasturbine;
- die Menge an der Gasturbine zugeführtem Gas;
- ein Sollwert für die Abgastemperatur der Gasturbine.

Dabei ist zu beachten, dass in Gasturbinen üblicherweise über einen geeigneten Regler ein gewünschter Wert für die Abgastemperatur der Turbine eingestellt werden kann. Dieser Wert entspricht dem oben genannten Sollwert.

Ein weiterer bevorzugter Einsatzbereich des erfindungsgemäßen Verfahrens ist die Erstellung eines datengetriebenen Modells für eine Windturbine. Dabei werden als Messgrößen der Betriebsgrößen in den Datensätzen vorzugsweise eine oder mehrere der folgenden Größen verwendet:
- die mit der Windturbine generierte elektrische Leistung;
- die Windgeschwindigkeit in der Umgebung, in der die Windturbine betrieben wird;
- die Drehzahl der Windturbine;
- die Biegekräfte und/oder Auslenkungen und/oder Wechselbelastungen an den Rotorblättern der Windturbine;
- die Schwingung des Turms der Windturbine.

Als Stellgrößen der Betriebsgrößen einer Windturbine werden in den Datensätzen vorzugsweise eine oder mehrere der folgenden Größen verwendet:
- der Anstellwinkel der Rotorblätter der Windturbine;
- das Kennfeld der Windturbine, das den Zusammenhang zwischen Drehzahl und der von der Windturbine generierten Leistung repräsentiert.

In einer weiteren, besonders bevorzugten Ausführungsform wird mit dem durch das erfindungsgemäße Verfahren generierten datengetriebenen Modell ein Steuerungs- und/oder Regelungsmodell für den Betrieb des technischen Systems basierend auf einem oder mehreren Optimierungskriterien berechnet. Dieses berechnete Steuerungs- und/oder Regelungsmodell gibt Änderungen von einer oder mehreren Stellgrößen aus den Betriebsgrößen des technischen Systems in Abhängigkeit von einer oder mehreren Messgrößen aus den Betriebsgrößen des technischen Systems an und ermöglicht hierdurch im Realbetrieb des technischen Systems eine geeignete Einstellung der Stellgrößen.

Wird das Steuerungs- und/oder Regelungsmodell einer Gasturbine berechnet, so umfassen das oder die Optimierungskriterien vorzugsweise eine möglichst geringe Schadstoffemission und/oder eine möglichst geringe Verbrennungsdynamik oder auch einen möglichst hohen Wirkungsgrad (Heat Rate) oder eine möglichst hohe Leistung. Auf diese Weise wird ein umweltgerechter Betrieb der Gasturbine bzw. eine lange Lebensdauer der Turbine sichergestellt.

Wird das Steuerungs- und/oder Regelungsmodell für eine Windturbine berechnet, so umfassen das oder die Optimierungskriterien insbesondere einen möglichst hohen Wirkungsgrad der Windturbine und/oder möglichst geringe Biegekräfte an den Rotorblättern der Windturbine. Hierdurch wird ein optimaler Betrieb bzw. wiederum eine lange Lebensdauer der Windturbine sichergestellt.

In einer weiteren, besonders bevorzugten Ausführungsform ist das Steuerungs- und/oder Regelungsmodell derart ausgestaltet, dass die jeweiligen Konfidenzmaße von Datensätzen aus im Betrieb des technischen System auftretenden Betriebsgrößen mit dem gelernten Dichteschätzer ermittelt werden, wobei die Änderung einer oder mehrerer Stellgrößen aus den Betriebsgrößen begrenzt wird und/oder der Betrieb der mit dem datengetriebenen Modell verbundenen Funktion und/oder des technischen Systems abgebrochen oder erst gar nicht gestartet wird, wenn das entsprechende Konfidenzmaß unterhalb einer vorbestimmten Schwelle liegt. Auf diese Weise kann der im Rahmen des erfindungsgemäßen Verfahrens gelernte Dichteschätzer auch dazu genutzt werden, den Betrieb des technischen Systems nur dann zu autorisieren, wenn die Betriebsgrößen des technischen Systems in einem Bereich mit ausreichend hoher Datendichte liegen.

In einer weiteren Ausführungsform des erfindungsgemäßen Verfahrens wird mit dem generierten datengetriebenen Modell ein Überwachungsmodell berechnet, welches im Falle, dass eine oder mehrere, im Betrieb des technischen Systems auftretende Betriebsgrößen mehr als ein vorbestimmtes Maß von dem oder den entsprechenden, über das generierte datengetriebene Modell reproduzierten Betriebsgrößen abweichen, eine Warnmeldung und/oder Alarmmeldung ausgegeben und/oder eine automatisierte Sicherungsmaßnahme des technischen Systems ausgelöst wird. Vorzugsweise kann in einem solchen Überwachungsmodell auch der gelernte Dichteschätzer geeignet berücksichtigt werden. In diesem Fall ist das Überwachungsmodell derart ausgestaltet, dass jeweilige Konfidenzmaße für Datensätze aus im Betrieb des technischen Systems auftretenden Betriebsgrößen mit dem gelernten Dichteschätzer ermittelt werden, wobei das vorbestimmte Maß, basierend auf dem eine Warnmeldung generiert wird, umso größer eingestellt wird, je kleiner das jeweilige Konfidenzmaß auf den Eingangsgrößen des Modells ist. Auf diese Weise wird die Meldeschwelle für Datensätze mit geringer Datendichte geeignet heraufgesetzt. Ggf. kann im Falle, dass das jeweilige Konfidenzmaß kleiner als ein vorbestimmter Schwellwert ist, auch die Meldung ausgegeben werden, dass aktuell keine Warnmeldungen wegen zu geringer Datendichte ausgegeben werden können und damit keine Überwachung möglich ist.

In einer besonders bevorzugten Ausführungsform wird das Steuerungs- und/oder Regelungsmodell und/oder das Überwachungsmodell basierend auf Reinforcement-Learning und/oder basierend auf einer Modell-prädiktiven Regelung und/oder basierend auf einem Optimierungsverfahren berechnet. Verfahren des Reinforcement-Learnings sowie der Modell-prädiktiven Regelung sind dabei hinlänglich aus dem Stand der Technik bekannt. Ebenso sind entsprechende Optimierungsverfahren bekannt. Beispielsweise kann das Optimierungsverfahren auf gradientenbasierten oder stochastischen Suchverfahren nach dem entsprechend definierten optimalen Wert gemäß des Steuerungs- bzw. Regelungsmodells bzw. Überwachungsmodells durchgeführt werden. In einer weiteren, besonders bevorzugten Ausführungsform wird das Steuerungs- und/oder Regelungsmodell und/oder das Überwachungsmodell basierend auf einem neuronalen Netz, insbesondere einem rekurrenten neuronalen Netz, gelernt.

Als Techniken zur Berechnung eines entsprechenden Steuerungs- und/oder Regelungsmodells bzw. Überwachungsmodells eignen sich insbesondere Verfahren, die in der Druckschrift DE 10 2007 001 025 A1 (Recurrent-Control-Neural-Network) bzw. DE 10 2007 017 259 A1 (Neural-Rewards-Regression) bzw. DE 10 2007 042 440 B3 (Policy-Gradient-Neural-Rewards-Regression) beschrieben sind. Ebenso kann die aus dem Stand der Technik bekannte Neural-Fitted-Q-Iteration (siehe Druckschrift [2]) zur Berechnung entsprechender Steuerungs- und/oder Regelungsmodelle bzw. Überwachungsmodelle eingesetzt werden.

Gegebenenfalls können beim Lernen eines Steuerungs- und/oder Regelungsmodells bzw. eines Überwachungsmodells mit einem neuronalen Netz Regularisierungsverfahren eingesetzt werden. Beispielsweise kann ein sog. Straf-Term für Gewichte im neuronalen Netz (englisch: weight penalty term) neben dem Fehler für den jeweiligen Datensatz hinzugefügt werden, so dass eher lineare und damit besser extrapolierende Modelle in Regionen mit geringer Datendichte erzeugt werden. Ebenso können die Gewichte des neuronalen Netzes, die mit der an sich bekannten Bewertungsfunktion Inverse Kurtosis selektiert wurden, abgeschnitten werden, wodurch das Verhalten in Datenregionen mit geringer Datendichte verstetigt wird. Dies ist insbesondere bei der Berechnung eines Steuerungs- und/oder Regelungsmodells für eine Gas- oder Windturbine von Vorteil.

In einer bevorzugten Ausführungsform wird der Zusammenhang zwischen Konfidenzmaßen bzw. Modellfehlern und der Auswahl bzw. Gewichtung der Datensätze bei der Generierung des datengetriebenen Modells über eine Funktion modelliert. Dabei wird eine Funktion definiert, welche vom Konfidenzmaß und vom Modellfehler abhängt, wobei die Funktion basierend auf dem Konfidenzmaß und Modellfehler eines Datensatzes festlegt, ob ein Datensatz ausgewählt wird bzw. wie hoch die Gewichtung des Datensatzes ist. Die Funktion kann je nach Anwendungsfall unterschiedlich ausgestaltet sein. Eine konkrete Festlegung einer solchen Funktion liegt im Rahmen von fachmännischem Handeln. Beispielsweise kann die Funktion die entsprechenden Zusammenhänge diskontinuierlich über Treppen oder in geeigneter Weise kontinuierlich modellieren.

In einer weiteren bevorzugten Ausführungsform des erfindungsgemäßen Verfahrens werden die Datensätze bei der Generierung des datengetriebenen Modells derart ausgewählt, dass sie für den nächsten Iterationsschritt basierend auf den Datensätzen zugeordneten Wahrscheinlichkeiten mittels Stichprobenentnahme entnommen werden. Das heißt, den Datensätzen werden basierend auf den jeweiligen Konfidenzmaßen bzw. Modellfehlern in geeigneter Weise Wahrscheinlichkeiten zugewiesen, die dann im Rahmen eines Samplings berücksichtigt werden. Die Zuweisung der Wahrscheinlichkeiten kann z.B. über die oben beschriebene Funktion erfolgen.

In einer weiteren Ausführungsform des erfindungsgemäßen Verfahrens werden den Datensätzen aus den Trainingsdaten Gewichte zugeordnet, welche beim Lernen des Dichteschätzers und des datengetriebenen Modells berücksichtigt werden, wobei die Gewichte mittels des Dichteschätzers und des datengetriebenen Modells, die in einem jeweiligen Iterationsschritt gelernt wurden, derart aktualisiert werden, dass Datensätze aus den Trainingsdaten mit niedrigen Konfidenzmaßen und hohen Modellfehlern höhere Gewichte erhalten. Die Gewichte können auf verschiedene Weise von dem Dichteschätzer bzw. dem datengetriebenen Modell berücksichtigt werden. In einer Variante der Erfindung repräsentieren die Gewichte Wahrscheinlichkeiten, welche durch den Dichteschätzer und das datengetriebene Modell verarbeitet werden. Beispielsweise können durch den Dichteschätzer und/oder das datengetriebene Modell Datensätze aus Trainingsdaten basierend auf deren Wahrscheinlichkeiten zum Lernen ausgewählt werden. Die Wahrscheinlichkeiten können auch im Rahmen des Lernens geeignet berücksichtigt werden, beispielsweise in einem von dem Dichteschätzer oder datengetriebenen Modell verwendeten stochastischen Gradientenabstiegsverfahren.

Das erfindungsgemäße Verfahren kann auf verschiedene Weise initialisiert werden. In einer Ausführungsform wird das Verfahren mit einer Teilmenge von Datensätzen aus den Trainingsdaten, welche z.B. zufällig festgelegt ist, initialisiert. Ebenso kann das Verfahren mit allen Datensätzen aus den Trainingsdaten mit geeignet festgelegten initialen Gewichten gestartet werden.

Die im Rahmen des erfindungsgemäßen Verfahrens ermittelten Modellfehler können beispielsweise durch die absolute betragsmäße Abweichung des über das datengetriebene Modell reproduzierten Datensatzes bzw. der reproduzierten Betriebsgrößen des Datensatzes von dem entsprechenden Datensatz der Trainingsdaten bzw. der entsprechenden Betriebsgrößen dieses Datensatzes repräsentiert werden. Ebenso können die Modellfehler relative Abweichungen darstellen, bei denen die absolute betragsmäße Abweichung in Bezug auf die Standardabweichung aller Modellfehler der Datensätze ermittelt wird, welche im jeweiligen Iterationsschritt reproduziert werden.

Das im erfindungsgemäßen Verfahren ausgegebene Konfidenzmaß kann ebenfalls geeignet normiert sein, z.B. auf ein Intervall zwischen Null und Eins, wobei der Wert Null keine Konfidenz (d.h. geringe Datendichte) und der Wert Eins hohe Konfidenz (d.h. hohe Datendichte) repräsentiert.

Die im Rahmen des erfindungsgemäßen Verfahrens durchgeführte Iteration kann basierend auf verschiedenen Kriterien beendet werden. In einer bevorzugten Ausführungsform wird die Iteration dann beendet, wenn zumindest ein vorbestimmter Anteil der Modellfehler der für den nächsten Iterationsschritt ausgewählten oder gewichteten Datensätze unterhalb einer vorbestimmten Schwelle liegen und/oder wenn zumindest ein vorbestimmter Anteil der Konfidenzmaße der für den nächsten Iterationsschritt ausgewählten oder gewichteten Datensätze oberhalb einer vorgegebenen Schwelle liegen. Auf diese Weise wird sichergestellt, dass das Verfahren dann beendet wird, wenn eine bestimmte Mindestqualität des gelernten datengetriebenen Modells erreicht wurde. Der vorbestimmte Anteil kann dabei z.B. bei 95% oder 99% oder mehr aller Modellfehler bzw. Konfidenzmaße liegen.

In einer weiteren Ausführungsform des erfindungsgemäßen Verfahrens wird die Iteration dann beendet, wenn der durchschnittliche Modellfehler der für den nächsten Iterationsschritt ausgewählten und gewichteten Datensätze gegenüber dem vorhergehenden Iterationsschritt nicht mehr kleiner wird und/oder alle Konfidenzmaße der für den nächsten Iterationsschritt ausgewählten und gewichteten Datensätze oberhalb einer vorbestimmten Schwelle liegen.

Neben dem oben beschriebenen Verfahren zum Generieren eines datengetriebenen Modells betrifft die Erfindung ferner ein Verfahren zum Betrieb eines technischen Systems, bei dem ein datengetriebenes Modell mit dem erfindungsgemäßen Verfahren bzw. mit einer oder mehreren bevorzugten Varianten des erfindungsgemäßen Verfahrens generiert wird bzw. generiert worden ist und anschließend zur Analyse und/oder Beeinflussung (insbesondere direkten Beeinflussung) des Betriebs des technischen Systems eingesetzt wird.

Dieses Verfahren setzt somit das erfindungsgemäß generierte datengetriebene Modell im Rahmen des Realbetriebs eines technischen Systems ein. Vorzugsweise wird dabei eine Variante zur Generierung des datengetriebenen Modells eingesetzt, welche ein Steuerungs- und/oder Regelungsmodell bzw. Überwachungsmodell berechnet. In diesem Fall wird das technische System mit dem Steuerungs- und/oder Regelungsmodell und/oder dem Überwachungsmodell geregelt und/oder gesteuert und/oder überwacht.

Neben den oben beschriebenen Verfahren betrifft die Erfindung ferner ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Rechner ausgeführt wird.

Ausführungsbeispiele der Erfindung werden nachfolgend anhand der beigefügten Figuren detailliert beschrieben.

Es zeigen:
- Fig. 1: eine schematische Darstellung einer ersten Ausführungsform des erfindungsgemäßen Verfahrens; und
- Fig. 2: eine schematische Darstellung einer zweiten Ausführungsform des erfindungsgemäßen Verfahrens.

Die nachfolgend beschriebenen Ausführungsformen des erfindungsgemäßen Verfahrens dienen dazu, ein datengetriebenes Modell eines technischen Systems unter Verwendung von Trainingsdaten umfassend eine Vielzahl von Datensätzen zu generieren. Die mit diesen Ausführungsformen generierten datengetriebenen Modelle können dann in geeigneter Weise zur Berechnung entsprechender Steuerungs- und/oder Regelungsmodelle bzw. Überwachungsmodelle für das technische System eingesetzt werden, wie im Vorangegangenen beschrieben wurde. Diese Steuerungs- und/oder Regelungsmodelle bzw. Überwachungsmodelle können anschließend im Realbetrieb des technischen Systems zum Einsatz kommen, wie ebenfalls im Vorangegangenen dargelegt wurde. Ein besonders bevorzugter Anwendungsfall der im Folgenden beschriebenen Ausführungsformen ist dabei die Generierung eines datengetriebenen Modells für eine Gas- bzw. Windturbine.

In der hier beschriebenen Ausführungsform stellen die einzelnen Datensätze Vektoren dar, welche eine Vielzahl von Betriebsgrößen eines technischen Systems umfassen. Beispiele solcher Betriebsgrößen wurden im Vorangegangenen für Gas- und Windturbinen genannt. Die Betriebsgrößen der Vektoren stellen in einer Ausführungsform zeitlich aufeinander folgende Mess- und Stellgrößen des technischen Systems dar, so dass mit dem datengetriebenen Modell ein dynamisches Verhalten des technischen Systems gelernt wird. Die Betriebsgrößen in den Trainingsdaten wurden im Realbetrieb des technischen Systems erfasst und in einer Datenbank abgespeichert.

Ziel des erfindungsgemäßen Verfahrens ist es nunmehr, die relevanten Informationen aus den Trainingsdaten zu extrahieren und redundante Informationen zu eliminieren, so dass die Qualität des datengetriebenen Modells, welches mit den Trainingsdaten gelernt wird, verbessert wird. Insbesondere soll dabei die sogenannte perzentile Performanz des gelernten Modells verbessert werden. D.h., die Qualität des datengetriebenen Modells in Betriebsbereichen des technischen Systems mit wenigen Datensätzen soll erhöht werden.

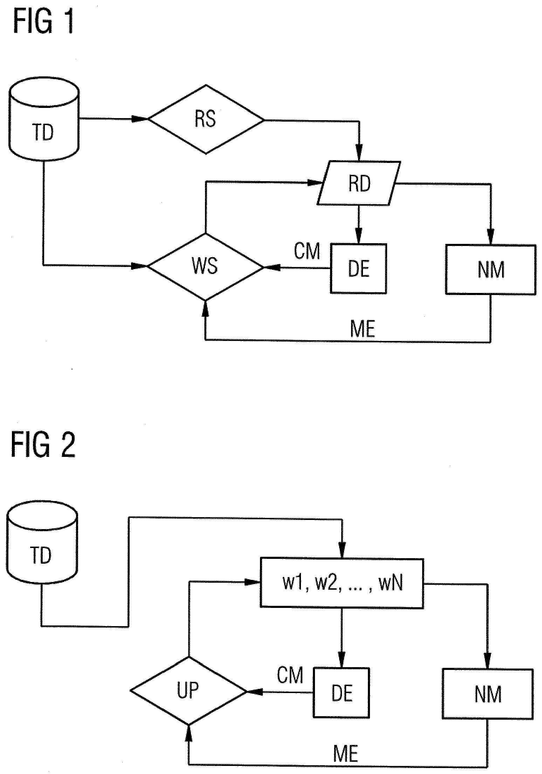

Fig. 1 zeigt eine Ausführungsform des erfindungsgemäßen Verfahrens, bei dem Trainingsdaten TD verarbeitet werden, welche in einer entsprechenden Datenbank hinterlegt sind. Wie bereits erwähnt, beziehen sich diese Trainingsdaten auf Datensätze in der Form von Betriebsgrößen eines technischen Systems, wobei ggf. eine Vorab-Filterung vorgenommen wurde, so dass nur bestimmte, für das datengetriebene Modell relevante Betriebsgrößen der Datensätze bzw. nur bestimmte Datensätze in dem Verfahren weiterverarbeitet werden. Die Ausführungsform der Fig. 1 beruht auf der Idee, dass zum Lernen des datengetriebenen Modells Teilmengen aus den Trainingsdaten TD über Sampling (d.h. Stichprobenentnahme) geeignet ausgewählt werden. Bei der Initialisierung des Verfahrens erfolgt zunächst eine zufällige Auswahl einer Teilmenge der Trainingsdaten im Schritt RS (RS = Random Sampling). Diese Teilmenge ist in Fig. 1 mit RD (RD = Reduced Dataset) bezeichnet. Mit dieser Teilmenge wird ein datengetriebenes Modell in der Form eines neuronalen Netzes bzw. eines neuronalen Modells NM gelernt, wobei hierzu an sich bekannte Lernverfahren, wie z.B. Reinforcement-Learning, eingesetzt werden.

Parallel wird mit der Teilmenge ein Dichteschätzer bzw. Datenenkapsulator DE gelernt. In der hier beschriebenen Ausführungsform wird als Datenenkapsulator der aus der Druckschrift [1] bekannte Dichteschätzer beruhend auf Neural Clouds verwendet. Die Dichteschätzung basierend auf diesem Verfahren ist bekannt und wird deshalb nicht detailliert beschrieben. Ziel der Dichteschätzung ist es, für einen entsprechenden Datensatz bzw. Datenpunkt dessen "Neuigkeit" dahingehend zu ermitteln, inwieweit weitere Datensätze der Trainingsdaten ähnlich zu dem betrachtenden Datensatz sind, wobei die Ähnlichkeit durch einen Abstand der Datensätze zueinander beschrieben wird. Dieser Abstand ist durch den euklidischen Abstand der Datenpunkte im Datenraum gegeben. Mit dem Dichteschätzer aus der Druckschrift [1] wird zunächst eine Normalisierung der einzelnen Datensätze bzw. Datenpunkte basierend auf einer Min-Max-Normalisierungs-Methode durchgeführt. Anschließend erfolgt eine Clusterung der Datenpunkte basierend auf einer Abwandlung des aus dem Stand der Technik bekannten K Means Algorithmus, der auch als "Advanced K Means" Algorithmus bezeichnet wird. Dieser Algorithmus liefert Clusterzentren in dem Raum der Datenpunkte. In einem nächsten Schritt werden Gaußsche Glocken über die Zentren gelegt, und anschließend erfolgt eine Normalisierung der Gaußschen Glocken. Als Endergebnis des Algorithmus erhält man dann einen gelernten Datenenkapsulator, der für einen jeweiligen Datensatz eine Konfidenz ermittelt, welche die Ähnlichkeit des Datensatzes zu Datensätzen aus den Trainingsdaten repräsentiert und in der obigen Druckschrift [1] als Ausfallwahrscheinlichkeit für das betrachtete technische System gewertet wird.

Nach Abschluss des Lernens des neuronalen Netzes NM können Datensätze aus den Trainingsdaten bis auf einen Modellfehler reproduziert werden. Dabei wird ein bestimmter Anteil der Betriebsgrößen eines Datensatzes als Eingabevektor des neuronalen Netzes verarbeitet. Das neuronale Netz liefert dann andere Betriebsgrößen des entsprechenden Datensatzes als Ausgabevektor. Über den Unterschied zwischen dem tatsächlichen Ausgabevektor gemäß den Trainingsdaten und den über das neuronale Netz berechneten Ausgabevektor ergibt sich der entsprechende Modellfehler.

In der Ausführungsform der Fig. 1 werden entsprechende Konfidenzen CM des Datenenkapsulators DE und entsprechende Modellfehler ME des neuronalen Netzes NM dazu genutzt, um ein gewichtetes Sampling WS durchzuführen. Für das gewichtete Sampling werden für alle Datensätze aus den Trainingsdaten TD jeweils der sich mit dem gelernten neuronalen Netz ergebende Modellfehler und die sich über den Datenenkapsulator ergebende Konfidenz ermittelt. Für jede Kombination dieser Werte wird für den entsprechenden Datensatz eine Wahrscheinlichkeit festgelegt, wobei die Wahrscheinlichkeiten für alle Datensätze auf 1 normiert ist. Die Wahrscheinlichkeiten werden dabei in geeigneter Weise derart bestimmt, dass ein Datensatz mit einer niedrigen Konfidenz eine höhere Wahrscheinlichkeit als ein Datensatz mit höherer Konfidenz bei gleichem Modellfehler aufweist. Ferner sind die Wahrscheinlichkeiten derart festgelegt, dass ein Datensatz mit hohem Modellfehler eine größere Wahrscheinlichkeit als ein Datensatz mit niedrigem Modellfehler bei gleicher Konfidenz aufweist. Anschließend wird mit diesen Wahrscheinlichkeiten das Sampling WS durchgeführt. Dabei werden durch das Sampling eher solche Datensätze aus den Trainingsdaten entnommen, welche einen hohen Grad an Neuigkeit aufgrund niedriger Konfidenz aufweisen bzw. welche durch das datengetriebene Modell schlecht reproduziert werden.

Nach der Durchführung der Stichprobenentnahme WS erhält man eine neue Teilmenge von Datensätzen RD, die nunmehr in einem nächsten Iterationsschritt zum weiteren Lernen des Datenenkapsulators DE und des neuronalen Netzes NM eingesetzt werden. Anschließend erfolgt wiederum ein neues gewichtetes Sampling WS, wobei hierfür jedoch die entsprechenden Wahrscheinlichkeiten für das Sampling neu über den nochmals gelernten Datenenkapsulator bzw. das nochmals gelernte neuronale Netz festgelegt werden. Schließlich wird das Verfahren mit der neu generierten Teilmenge von Datensätzen im nächsten Iterationsschritt fortgesetzt.

Das iterative Lernen des Datenenkapsulators bzw. des neuronalen Netzes wird basierend auf einem geeigneten Abbruchkriterium beendet. Das Abbruchkriterium ist dabei derart festgelegt, dass das Verfahren beendet wird, wenn für alle Datensätze einer neu generierten Teilmenge die jeweiligen Modellfehler kleiner als ein vorgegebenen Schwellwert und die jeweiligen Konfidenzen größer als ein vorbestimmter Schwellwert sind. Als Endergebnis des Verfahrens erhält man ein gelerntes neuronales Netz, welches anschließend zur Berechnung eines Steuerungs- und/oder Regelungsmodells bzw. eine Überwachungsmodells des technischen Systems eingesetzt werden kann.

Fig. 2 zeigt eine zweite Ausführungsform des erfindungsgemäßen Verfahrens. Im Unterschied zu Fig. 1 werden beim Lernen des Datenenkapsulators DE und des neuronalen Netzes NM immer alle Datensätze der Trainingsdaten TD (ggf. geeignet vorgefiltert) verwendet. Die Datensätze sind jedoch in geeigneter Weise unter Verwendung des gelernten Datenenkapsulators bzw. des gelernten neuronalen Netzes gewichtet. Das Verfahren der Fig. 2 wird zu Beginn geeignet initialisiert, wobei nunmehr im Rahmen der Initialisierung entsprechende Gewichte w1, w2, ..., wN für die N betrachteten Datensätze gemäß den Trainingsdaten ermittelt werden. Die Gewichte können z.B. zufällig oder mit dem Wert 1/N initialisiert werden. Die Gewichte stellen in der hier beschriebenen Ausführungsform Wahrscheinlichkeiten dar, welche von dem Datenenkapsulator DE bzw. dem neuronalen Netz NM berücksichtigt werden.

Im Unterschied zur Ausführungsform der Fig. 1 werden nunmehr alle Trainingsdaten ohne eine Vorab-Auswahl berücksichtigt. Über die durch die Gewichte repräsentierten Wahrscheinlichkeiten wählt der Datenenkapsulator, der dem Dichteschätzer der Druckschrift [1] entspricht, entsprechende Datensätze aus. Die Wahrscheinlichkeiten können im Datenenkapsulator bei der oben beschriebenen Normalisierung einfließen, wobei gemäß den Wahrscheinlichkeiten Datensätze ausgewählt werden, welche bei der Normalisierung berücksichtigt werden. Ebenso können die Wahrscheinlichkeiten bei der oben beschriebenen Clusterung eingesetzt werden. Dabei wird über die Wahrscheinlichkeiten ausgewählt, welche Datensätze beim Finden von Clusterzentren verwendet werden. Ebenso können die Wahrscheinlichkeiten bei der im Datenenkapsulator verwendeten Distanzberechnung von Clusterzentren eingesetzt werden. Auch hier wird durch die Wahrscheinlichkeiten festgelegt, welche Datensätze bei der Berechnung der Distanzen berücksichtigt werden. Im Rahmen der Normalisierung, der Clusterung und der Berechnung der Distanzen können die entsprechend verwendeten Datensätze einmalig bestimmt werden bzw. für jeden dieser Schritte separat neu ermittelt werden.

Ferner werden über die Gewichte entsprechende Datensätze ausgewählt, welche zum bzw. im Rahmen des Lernens des neuronalen Netzes berücksichtigt werden. Beispielsweise kann beim Lernen basierend auf der Auswahl der Datensätze der Gradient im Rahmen eines bekannten stochastischen Gradientenabstiegsverfahrens ermittelt werden.

Nach dem Lernen des Datenenkapsulators bzw. des neuronalen Netzes erfolgt ein Aktualisierungsschritt UP, in dem basierend auf dem gelernten Datenenkapsulator und dem gelernten neuronalen Netz die ursprünglichen initialisierten Gewichte neu berechnet werden. Dies geschieht in Analogie zu Fig. 1 dadurch, dass für alle Datensätze aus den Trainingsdaten die entsprechenden Konfidenzen des Datenenkapsulators und die entsprechenden Modellfehler des neuronalen Netzes ermittelt werden und hierüber Gewichte bzw. Wahrscheinlichkeiten derart abgeleitet werden, dass eine Wahrscheinlichkeit um so höher ist, je geringer die Konfidenz des betrachteten Datensatzes bzw. je größer der Modellfehler des betrachteten Datensatzes ist. Die Festlegung eines entsprechenden Zusammenhangs, beispielsweise basierend auf einer Funktion, liegt dabei im Rahmen von fachmännischem Handeln. Beispielsweise kann ein linearer Zusammenhang über eine entsprechende Funktion modelliert werden.

Das Verfahren der Fig. 2 wird mit den im Schritt UP aktualisierten Gewichten in einem nächsten Iterationsschritt fortgesetzt. In diesem Iterationsschritt werden der Datenenkapsulator und das neuronale Netz nochmals unter Berücksichtigung der neuen Gewichte gelernt, und anschließend erfolgt mit dem gelernten Datenenkapsulator bzw. den gelernten neuronalen Netz eine neue Aktualisierung der Gewichte. Dieses iterative Verfahren wird über ein geeignetes Abbruchkriterium beendet, wobei das Abbruchkriterium in Analogie zu Fig. 1 derart festgelegt ist, dass das Verfahren dann beendet wird, wenn die sich für die jeweiligen Datensätze ergebenden Konfidenzen des Datenenkapsulators über einen vorgegebenen Schwellwert liegen bzw. die sich für die jeweiligen Datensätze ergebenden Modellfehler des neuronalen Netzes unter einem vorbestimmten Schwellwert liegen. Das auf diese Weise gelernte neuronale Netz kann anschließend wiederum zur Berechnung eines Modells zur Steuerung bzw. Überwachung des entsprechenden technischen Systems verwendet werden.

Die im Vorangegangenen beschriebenen Ausführungsformen des erfindungsgemäßen Verfahrens weisen eine Reihe von Vorteilen auf. Insbesondere können aus einer großen Menge von Trainingsdaten solche Datensätze extrahiert werden, mit denen sich das den Datensätzen zugrunde liegende technische System gut beschreiben lässt. Über eine geeignete Auswahl von Teilmengen aus den Datensätzen bzw. Gewichtung der Datensätze kann dabei ein datengetriebenes Modell gelernt werden, welches stärker Bereiche mit wenigen Datensätzen berücksichtigt. Es werden somit solche Betriebszustände des technischen Systems stärker berücksichtigt, welche vom Normalbetrieb abweichen.

Mit dem erfindungsgemäßen Verfahren kann durch die Auswahl von relevanten Datensätzen ein schnelleres Lernen eines entsprechenden datengetriebenen Modells basierend auf Trainingsdaten erreicht werden. Ferner weist das gelernte datengetriebene Modell eine bessere perzentile Performanz auf, da bevorzugt in Bereichen mit wenigen Daten gelernt wird. Eine gute perzentile Performanz ist bei der korrekten Vorhersage von Fehlern im Betrieb eines technischen Systems von Bedeutung.

### Literaturverzeichnis:

[1] B. Lang et al., Neural Clouds for Monitoring of Complex Systems, Optical Memory and Neural Networks (Information Optics), 2008, Vol. 17, No. 3, S. 183-192
[2] M. Riedmiller, Neural Fitted Q Iteration - First Experiences with a Data Efficient Neural Reinforcement Learning Method, Proc. of the European Conf. on Machine Learning, 2005, S. 317-328

## Patentansprüche

1. Verfahren zur rechnergestützten Generierung eines datengetriebenen Modells (NM) eines technischen Systems, insbesondere einer Gasturbine oder Windturbine, zur Verwendung für automatisierte Überwachungs- und/oder Prognose- und/oder Regelungsaufgaben, wobei das datengetriebene Modell basierend auf Trainingsdaten generiert wird, welche eine Vielzahl von Datensätzen umfassen, welche jeweils eine Mehrzahl von Betriebsgrößen des technischen Systems repräsentieren, **dadurch gekennzeichnet dass**:
- für eine Anzahl von Iterationsschritten jeweils das datengetriebene Modell (NM) und ein Dichteschätzer (DE) mittels Datensätzen aus den Trainingsdaten (TD) gelernt werden, wobei der Dichteschätzer (DE) für Datensätze aus den Trainingsdaten jeweils ein Konfidenzmaß (CM) ausgibt, welches umso höher ist, je größer die Ähnlichkeit eines jeweiligen Datensatzes zu anderen Datensätzen aus den Trainingsdaten (TD) ist, und wobei durch das datengetriebene Modell (NM) Datensätze der Trainingsdaten jeweils mit einem Modellfehler (ME) reproduziert werden;
- mittels des Dichteschätzers (DE) und des datengetriebenen Modells (NM), die in einem jeweiligen Iterationsschritt gelernt wurden, Datensätze aus den Trainingsdaten (TD) für das Lernen im nächsten Iterationsschritt ausgewählt oder gewichtet werden, wobei Datensätze aus den Trainingsdaten (TD) mit niedrigen Konfidenzmaßen (CM) und hohen Modellfehlern (ME) eher ausgewählt oder höher gewichtet werden.

2. Verfahren nach Anspruch 1, bei dem als datengetriebenes Modell (NM) ein neuronales Netz, insbesondere ein rekurrentes neuronales Netz, gelernt wird.

3. Verfahren nach Anspruch 1 oder 2, bei dem die Betriebsgrößen des technischen Systems eine oder mehrere der folgenden Messgrößen einer Gasturbine umfassen:
- die Temperatur in der Umgebung, in der die Gasturbine betrieben wird;
- die Luftfeuchtigkeit in der Umgebung, in der die Gasturbine betrieben wird;
- den Luftdruck in der Umgebung, in der die Gasturbine betrieben wird;
- die Leistung der Gasturbine, insbesondere ein prozentualer Leistungswert;
- die Brennstoffgüte der Gasturbine;
- die Schadstoffemission der Gasturbine, insbesondere die Emission von Stickoxiden und/oder Kohlenmonoxid;
- die Temperatur einer oder mehrerer Turbinenschaufeln der Gasturbine;
- die Abgastemperatur der Gasturbine;
- die Verbrennungsdynamik der Gasturbine.

4. Verfahren nach einem der vorhergehenden Ansprüche, bei dem die Betriebsgrößen des technischen Systems eine oder mehrere der folgenden Stellgrößen einer Gasturbine umfassen:
- die Stellung von einer oder mehreren Leitschaufeln in der Gasturbine;
- die Menge an der Gasturbine zugeführtem Gas;
- einen Sollwert für die Abgastemperatur der Gasturbine.

5. Verfahren nach einem der vorhergehenden Ansprüche, bei dem die Betriebsgrößen des technischen Systems eine oder mehrere der folgenden Messgrößen einer Windturbine umfassen:
- die mit der Windturbine generierte elektrische Leistung;
- die Windgeschwindigkeit in der Umgebung, in der die Windturbine betrieben wird;
- die Drehzahl der Windturbine;
- die Biegekräfte und/oder Auslenkungen und/oder Wechselbelastungen an den Rotorblättern der Windturbine;
- die Schwingung des Turms der Windturbine.

6. Verfahren nach einem der vorhergehenden Ansprüche, bei dem die Betriebsgrößen des technischen Systems eine oder mehrere der folgenden Stellgrößen einer Windturbine umfassen:
- den Anstellwinkel der Rotorblätter der Windturbine;
- das Kennfeld der Windturbine, das den Zusammenhang zwischen Drehzahl und der von der Windturbine generierten elektrischen Leistung repräsentiert.

7. Verfahren nach einem der vorhergehenden Ansprüche, bei dem mit dem generierten datengetriebenen Modell (NM) ein Steuerungs- und/oder Regelungsmodell für den Betrieb des technischen Systems basierend auf einem oder mehreren Optimierungskriterien berechnet wird, wobei das Steuerungs- und/oder Regelungsmodell Änderungen von einer oder mehreren Stellgrößen aus den Betriebsgrößen des technischen Systems in Abhängigkeit von einer oder mehreren Messgrößen aus den Betriebsgrößen des technischen Systems angibt.

8. Verfahren nach Anspruch 7, bei dem das Steuerungs- und/oder Regelungsmodell einer Gasturbine berechnet wird, wobei das oder die Optimierungskriterien eine möglichst geringe Schadstoffemission und/oder eine möglichst geringe Verbrennungsdynamik und/oder einen möglichst hohen Wirkungsgrad und/oder eine möglichst hohe Leistung umfassen.

9. Verfahren nach Anspruch 7 oder 8, bei dem das Steuerungs- und/oder Regelungsmodell einer Windturbine erstellt wird, wobei das oder die Optimierungskriterien einen möglichst hohen Wirkungsgrad der Windturbine und/oder möglichst geringe Biegekräfte und/oder Auslenkungen und/oder Wechselbelastungen an den Rotorblättern der Windturbine umfassen.

10. Verfahren nach einem der Ansprüche 7 bis 9, bei dem das Steuerungs- und/oder Regelungsmodell derart ausgestaltet ist, dass die jeweiligen Konfidenzmaße (CM) von Datensätzen aus im Betrieb des technischen Systems auftretenden Betriebsgrößen mit dem gelernten Dichteschätzer (DE) ermittelt werden, wobei die Änderung einer oder mehrerer Stellgrößen aus den Betriebsgrößen begrenzt wird und/oder der Betrieb der mit dem datengetriebenen Modell verbundenen Funktion und/oder des technischen Systems abgebrochen oder nicht gestartet wird, wenn das entsprechende Konfidenzmaß (CM) unterhalb einer vorbestimmten Schwelle liegt.

11. Verfahren nach einem der vorhergehenden Ansprüche, bei dem mit dem generierten datengetriebenen Modell ein Überwachungsmodell berechnet wird, welches im Falle, dass eine oder mehrere, im Betrieb des technischen Systems auftretenden Betriebsgrößen mehr als ein vorbestimmtes Maß von der oder den entsprechenden, über das generierte datengetriebene Modell (NM) reproduzierten Betriebsgrößen abweichen, eine Warnmeldung und/oder Alarmmeldung ausgegeben und/oder eine automatisierte Sicherungsmaßnahme des technischen Systems ausgelöst wird.

12. Verfahren nach Anspruch 11, bei dem das Überwachungsmodell derart ausgestaltet ist, dass jeweilige Konfidenzmaße (CM) für Datensätze aus im Betrieb des technischen Systems auftretenden Betriebsgrößen mit dem gelernten Dichteschätzer ermittelt werden, wobei das vorbestimmte Maß, basierend auf dem eine Warnmeldung generiert wird, umso größer eingestellt wird, je kleiner das jeweilige Konfidenzmaß (CM) ist.

13. Verfahren nach einem der Ansprüche 7 bis 12, bei dem das Steuerungs- und/oder Regelungsmodell und/oder das Überwachungsmodell basierend auf Reinforcement-Learning und/oder basierend auf einer Modell-prädiktiven Regelung und/oder basierend auf einem Optimierungsverfahren berechnet werden.

14. Verfahren nach einem der Ansprüche 7 bis 13, bei dem das Steuerungs- und/oder Regelungsmodell und/oder das Überwachungsmodell basierend auf einem neuronalen Netz, insbesondere einem rekurrenten neuronales Netz, gelernt wird.

15. Verfahren nach einem der vorhergehenden Ansprüche, bei dem über eine vom Konfidenzmaß (CM) und vom Modellfehler (ME) abhängige Funktion die Auswahl oder Gewichtung der Datensätze aus den Trainingsdaten (TD) erfolgt.

16. Verfahren nach einem der vorhergehenden Ansprüche, wobei die Datensätze aus den Trainingsdaten derart ausgewählt werden, dass sie für den nächsten Iterationsschritt basierend auf den Datensätzen zugeordneten Wahrscheinlichkeiten mittels Stichprobenentnahme entnommen werden.

17. Verfahren nach einem der vorhergehenden Ansprüche, bei dem den Datensätzen aus den Trainingsdaten (TD) Gewichte (w1, w2, ..., wN) zugeordnet sind, welche beim Lernen des Dichteschätzers (DE) und des datengetriebenen Modells (NM) berücksichtigt werden, wobei die Gewichte (w1, w2, ..., wN) mittels des Dichteschätzers (DE) und des datengetriebenen Modells (NM), die in einem jeweiligen Iterationsschritt gelernt wurden, derart aktualisiert werden, dass Datensätze aus den Trainingsdaten (TD) mit niedrigen Konfidenzmaßen (CM) und hohen Modellfehlern (ME) höhere Gewichte erhalten.

18. Verfahren nach Anspruch 17, bei dem die Gewichte (w) Wahrscheinlichkeiten repräsentieren, welche durch den Dichteschätzer (DE) und das datengetriebene Modell (NM) verarbeitet werden.

19. Verfahren nach Anspruch 18, bei dem durch den Dichteschätzer (DE) und/oder das datengetriebene Modell (NM) Datensätze aus den Trainingsdaten (TD) basierend auf den Wahrscheinlichkeiten zum Lernen oder im Rahmen des Lernens ausgewählt werden.

20. Verfahren nach einem der vorhergehenden Ansprüche, bei dem das Verfahren mit einer Teilmenge (RD) von Datensätzen aus den Trainingsdaten (TD), welche insbesondere zufällig festgelegt ist, oder mit allen Datensätzen aus den Trainingsdaten (TD) mit initialen Gewichten (w) initialisiert wird.

21. Verfahren nach einem der vorhergehenden Ansprüche, bei dem der Dichteschätzer (DE) auf einem Neural Clouds Algorithmus basiert.

22. Verfahren nach einem der vorhergehenden Ansprüche, bei dem die Iteration beendet wird, wenn zumindest ein vorbestimmter Anteil der Modellfehler (ME) der für den nächsten Iterationsschritt ausgewählten oder gewichteten Datensätze unterhalb einer vorbestimmten Schwelle liegen und/oder wenn zumindest ein vorbestimmter Anteil der Konfidenzmaße (CM) der für den nächsten Iterationsschritt ausgewählten oder gewichteten Datensätze oberhalb einer vorgegebenen Schwelle liegen.

23. Verfahren zum Betrieb eines technischen Systems, bei dem ein datengetriebenes Modell mit einem Verfahren nach einem der vorhergehenden Ansprüche generiert wird und anschließend zur Analyse und/oder Beeinflussung des Betriebs des technischen Systems eingesetzt wird.

24. Verfahren nach Anspruch 23 in Kombination mit einem der Ansprüche 7 bis 14, bei dem das technische System mit dem Steuerungs- und/oder Regelungsmodell und/oder dem Überwachungsmodell geregelt und/oder gesteuert und/oder überwacht wird.

25. Computerprogrammprodukt mit einem auf einem maschinenlesbaren Träger gespeicherten Programmcode zur Durchführung eines Verfahrens nach einem der vorhergehenden Ansprüche, wenn der Programmcode auf einem Rechner ausgeführt wird.

## Claims

1. Method for the computer-aided generation of a data-driven model (NM) of a technical system, particularly a gas turbine or wind turbine, for use for automated monitoring and/or forecasting and/or regulatory tasks, wherein the data-driven model is generated on the basis of training data that comprise a multiplicity of data records that each represent a plurality of operating variables for the technical system, **characterized in that**:
- for a number of iteration steps the data-driven model (NM) and a density estimator (DE) are each learnt by means of data records from the training data (TD), wherein the density estimator (DE) outputs a confidence measure (CM) for all data records from the training data, said confidence measure being higher the greater the similarity of a respective data record to other data records from the training data (TD), and wherein the data-driven model (NM) reproduces data records for the training data with a model error (ME) in each case;
- the density estimator (DE) and the data-driven model (NM) that have been learnt in a respective iteration step are used to select or weight data records from the training data (TD) for the learning in the next iteration step, wherein data records from the training data (TD) with low confidence measures (CM) and high model errors (ME) are more readily selected or more highly weighted.

2. Method according to Claim 1, in which the data-driven model (NM) learnt is a neural network, particularly a recurrent neural network.

3. Method according to Claim 1 or 2, in which the operating variables for the technical system comprise one or more of the following measured variables for a gas turbine:
- the temperature in the environment in which the gas turbine is operated;
- the humidity in the environment in which the gas turbine is operated;
- the air pressure in the environment in which the gas turbine is operated;
- the power of the gas turbine, particularly a percentage power value;
- the fuel quality for the gas turbine;
- the pollutant emission by the gas turbine, particularly the emission of nitrogen oxides and/or carbon monoxide;
- the temperature of one or more turbine blades in the gas turbine;
- the exhaust temperature of the gas turbine;
- the internal combustion dynamics of the gas turbine.

4. Method according to one of the preceding claims, in which the operating variables for the technical system comprise one or more of the following manipulated variables for a gas turbine:
- the position of one or more guide vanes in the gas turbine;
- the quantity of gas supplied to the gas turbine;
- a setpoint value for the exhaust temperature of the gas turbine.

5. Method according to one of the preceding claims, in which the operating variables for the technical system comprise one or more of the following measured variables for a wind turbine:
- the electrical power generated with the wind turbine;
- the wind speed in the environment in which the wind turbine is operated;
- the speed of the wind turbine;
- the flexural forces and/or deflections and/or variations in stress on the rotor blades of the wind turbine;
- the vibration in the tower of the wind turbine.

6. Method according to one of the preceding claims, in which the operating variables for the technical system comprise one or more of the following manipulated variables for a wind turbine:
- the angle of attack of the rotor blades of the wind turbine;
- the family of characteristic curves for the wind turbine, representing the relationship between speed and the electrical power generated by the wind turbine.

7. Method according to one of the preceding claims, in which the generated data-driven model (NM) is used to calculate a control and/or regulatory model for the operation of the technical system on the basis of one or more optimization criteria, wherein the control and/or regulatory model specifies changes for one or more manipulated variables from the operating variables for the technical system on the basis of one or more measured variables from the operating variables for the technical system.

8. Method according to Claim 7, in which the control and/or regulatory model of a gas turbine is calculated, wherein the optimization criterion or criteria comprise a lowest possible pollutant emission and/or lowest possible internal combustion dynamics and/or a highest possible efficiency and/or a highest possible power.

9. Method according to Claim 7 or 8, in which the control and/or regulatory model of a wind turbine is created, wherein the optimization criterion or criteria comprise a highest possible efficiency for the wind turbine and/or lowest possible flexural forces and/or deflections and/or variations in stress on the rotor blades of the wind turbine.

10. Method according to one of Claims 7 to 9, in which the control and/or regulatory model is embodied such that the respective confidence measures (CM) for data records comprising operating variables that arise during operation of the technical system are ascertained using the learnt density estimator (DE), wherein the change in one or more manipulated variables from the operating variables is limited and/or the operation of the function connected to the data-driven model and/or of the technical system is terminated or not started when the relevant confidence measure (CM) is below a predetermined threshold.

11. Method according to one of the preceding claims, in which the generated data-driven model is used to calculate a monitoring model that, in the event of one or more operating variables that arise during operation of the technical system deviating from the relevant operating variable(s) reproduced using the generated data-driven model (NM) by more than a predetermined measure, outputs a warning report and/or alarm report and/or initiates an automated safety measure for the technical system.

12. Method according to Claim 11, in which the monitoring model is embodied such that respective confidence measures (CM) for data records comprising operating variables that arise during operation of the technical system are ascertained using the learnt density estimator, wherein the predetermined measure that is taken as a basis for generating a warning report is set greater the smaller the respective confidence measure (CM).

13. Method according to one of Claims 7 to 12, in which the control and/or regulatory model and/or the monitoring model are calculated on the basis of reinforcement learning and/or on the basis of model-predictive regulation and/or on the basis of an optimization method.

14. Method according to one of Claims 7 to 13, in which the control and/or regulatory model and/or the monitoring model is learnt on the basis of a neural network, particularly a recurrent neural network.

15. Method according to one of the preceding claims, in which a function that is dependent on the confidence measure (CM) and on the model error (ME) is used to select or weight the data records from the training data (TD).

16. Method according to one of the preceding claims, wherein the data records from the training data are selected such that they are taken by means of sampling for the next iteration step on the basis of probabilities associated with the data records.

17. Method according to one of the preceding claims, in which the data records from the training data (TD) have associated weights (w1, w2, ..., wN) that are taken into account when learning the density estimator (DE) and the data-driven model (NM), wherein the weights (w1, w2, ..., wN) are updated by means of the density estimator (DE) and of the data-driven model (NM) that have been learnt in a respective iteration step, such that data records from the training data (TD) with low confidence measures (CM) and high model errors (ME) are provided with higher weights.

18. Method according to Claim 17, in which the weights (w) represent probabilities that are processed by the density estimator (DE) and the data-driven model (NM).

19. Method according to Claim 18, in which the density estimator (DE) and/or the data-driven model (NM) select data records from the training data (TD) on the basis of the probabilities for the learning or in the course of the learning.

20. Method according to one of the preceding claims, in which the method is initialized with initial weights (w) with a subset (RD) of data records from the training data (TD), which is stipulated on a random basis, in particular, or with all data records from the training data (TD).

21. Method according to one of the preceding claims, in which the density estimator (DE) is based on a neural clouds algorithm.

22. Method according to one of the preceding claims, in which the iteration is terminated when at least a predetermined proportion of the model errors (ME) for the data records selected or weighted for the next iteration step are below a predetermined threshold and/or when at least a predetermined proportion of the confidence measures (CM) for the data records selected or weighted for the next iteration step are above a prescribed threshold.

23. Method for operating a technical system, in which a data-driven model is generated using a method according to one of the preceding claims and is subsequently used for analyzing and/or influencing the operation of the technical system.

24. Method according to Claim 23 in combination with one of Claims 7 to 14, in which the technical system is regulated and/or controlled and/or monitored using the control and/or regulatory model and/or the monitoring model.

25. Computer program product having a program code, stored on a machine-readable storage medium, for carrying out a method according to one of the preceding claims when the program code is executed on a computer.

## Revendications

1. Procédé destiné à la génération assistée par ordinateur d'un modèle piloté par des données (NM) d'un système technique, en particulier d'une turbine à gaz ou d'une éolienne, destiné à une utilisation pour des activités de surveillance et/ou de pronostic et/ou de régulation, dans lequel le modèle piloté par des données est généré en se basant sur des données d'apprentissage, lesquelles comprennent une pluralité de jeux de données, lesquels représentent respectivement une pluralité de grandeurs de fonctionnement du système technique, **caractérisé en ce que** :
- pour un certain nombre d'étapes d'itération le modèle piloté par des données (NM) et un estimateur de densité (DE) sont respectivement appris au moyen de jeux de données issus des données d'apprentissage (TD), dans lequel l'estimateur de densité (DE) émet respectivement un degré de confiance (CM) pour des jeux de données issus des données d'apprentissage, laquelle est d'autant plus élevée que la similitude d'un jeu de données respectif avec d'autres jeux de données issus des données d'apprentissage (TD) est élevée, et dans lequel par le biais du modèle piloté par des données (NM) des jeux de données des données d'apprentissage sont reproduits respectivement avec une erreur de modèle (ME) ;
- au moyen de l'estimateur de densité (DE) et du modèle piloté par des données (NM) qui ont été appris lors d'une étape d'itération respective, des jeux de données issus des données d'apprentissage (TD) sont sélectionnés ou pondérés pour l'apprentissage lors de l'étape d'itération suivante, dans lequel des jeux de données issus des données d'apprentissage (TD) sont plutôt sélectionnés avec des degrés de confiance (CM) bas et des erreurs de modèle (ME) élevées ou ont un poids plus élevé.

2. Procédé selon la revendication 1, dans lequel un réseau neuronal, en particulier un réseau neuronal récurrent, est appris en tant que modèle piloté par des données (NM).

3. Procédé selon la revendication 1 ou 2, dans lequel les grandeurs de fonctionnement du système technique comprennent une ou plusieurs des grandeurs de mesure suivantes d'une turbine à gaz :
- la température dans l'environnement immédiat dans lequel la turbine à gaz fonctionne ;
- l'humidité de l'air dans l'environnement immédiat dans lequel la turbine à gaz fonctionne ;
- la pression de l'air dans l'environnement immédiat dans lequel la turbine à gaz fonctionne ;
- la puissance de la turbine à gaz, en particulier une valeur de puissance en pourcentage ;
- les matières combustibles de la turbine à gaz ;
- l'émission de substances polluantes de la turbine à gaz, en particulier l'émission d'oxydes d'azote et/ou de monoxyde de carbone ;
- la température d'une ou plusieurs aubes de turbine de la turbine à gaz ;
- la température de gaz d'échappement de la turbine à gaz ;
- la dynamique de combustion de la turbine à gaz.

4. Procédé selon l'une des revendications précédentes, dans lequel les grandeurs de fonctionnement du système technique comprennent une ou plusieurs des grandeurs de réglage suivantes d'une turbine à gaz :
- la position d'une ou plusieurs aubes directrices dans la turbine à gaz ;
- la quantité de gaz amené à la turbine à gaz ;
une valeur théorique pour la température de gaz d'échappement de la turbine à gaz.

5. Procédé selon l'une des revendications précédentes, dans lequel les grandeurs de fonctionnement du système technique comprennent une ou plusieurs des grandeurs de mesure suivantes d'une éolienne :
- la puissance électrique générée avec l'éolienne ;
- la vitesse du vent dans l'environnement immédiat dans lequel l'éolienne fonctionne ;
- la vitesse de rotation de l'éolienne ;
- les forces de flexion et/ou les déviations et/ou les charges alternées au niveau des pales de rotor de l'éolienne ;
- l'oscillation du mât de l'éolienne.

6. Procédé selon l'une des revendications précédentes, dans lequel les grandeurs de fonctionnement du système technique comprennent une ou plusieurs grandeurs de réglage suivantes d'une éolienne :
- l'angle d'attaque des pales de rotor de l'éolienne ;
- le champ caractéristique de l'éolienne qui représente la relation entre la vitesse de rotation et la puissance électrique générée par l'éolienne.

7. Procédé selon l'une des revendications précédentes, dans lequel un modèle de commande et/ou de régulation pour le fonctionnement du système technique est calculé en se basant sur un ou plusieurs critères d'optimisation avec le modèle piloté par des données (NM) généré, dans lequel le modèle de commande et/ou de régulation indique des modifications d'une ou plusieurs grandeurs de réglage issues des grandeurs de fonctionnement du système technique en fonction d'une ou plusieurs grandeurs de mesure issues des grandeurs de fonctionnement du système technique.

8. Procédé selon la revendication 7, dans lequel le modèle de commande et/ou de régulation d'une turbine à gaz est calculé, dans lequel le ou les critères d'optimisation comprennent une émission de substances polluantes la plus faible possible et/ou une dynamique de combustion la plus faible possible et/ou un niveau de rendement le plus élevé possible et/ou une puissance la plus haute possible.

9. Procédé selon la revendication 7 ou 8, dans lequel le modèle de commande et/ou de régulation d'une éolienne est généré, dans lequel le ou les critères d'optimisation comprennent un niveau de rendement de l'éolienne le plus élevé possible et/ou des forces de flexion les plus basses possible et/ou des déviations et/ou des charges alternées au niveau des pales de rotor de l'éolienne.

10. Procédé selon l'une des revendications 7 à 9, dans lequel le modèle de commande et/ou de régulation est configuré de telle sorte que les degrés de confiance (CM) respectifs de jeux de données sont déterminés à partir des grandeurs de fonctionnement présentes dans le fonctionnement du système technique avec l'estimateur de densité (DE) appris, dans lequel la modification d'une ou plusieurs grandeurs de réglage issues des grandeurs de fonctionnement est limitée et/ou le fonctionnement de la fonction reliée au modèle piloté par des données et/ou du système technique est interrompu ou n'est pas lancé lorsque le degré de confiance (CM) correspondant se trouve en dessous d'un seuil prédéterminé.

11. Procédé selon l'une des revendications précédentes, dans lequel un modèle de surveillance est calculé avec le modèle piloté par des données généré, lequel dans le cas où une ou plusieurs grandeurs de fonctionnement présentes dans le fonctionnement du système technique s'écartent de plus d'un degré prédéterminé de la ou des grandeurs de fonctionnement correspondantes et reproduites par le biais du modèle piloté par des données (NM) généré, un signal d'avertissement et/ou un signal d'alerte sont émis et/ou une mesure de sécurité automatisée du système technique est déclenchée.

12. Procédé selon la revendication 11, dans lequel le modèle de surveillance est configuré de telle sorte que des degrés de confiance (CM) respectifs sont déterminés pour des jeux de données à partir de grandeurs de fonctionnement présentes dans le fonctionnement du système technique avec l'estimateur de densité appris, dans lequel plus le degré prédéterminé, qui est généré en se basant sur un signal d'avertissement, est ajusté à la hausse, plus le degré de confiance (CM) respectif est bas.

13. Procédé selon l'une des revendications 7 à 12, dans lequel le modèle de commande et/ou de régulation et/ou le modèle de surveillance sont calculés en se basant sur un apprentissage de renforcement et/ou en se basant sur une régulation prédictive par modèle et/ou en se basant sur un procédé d'optimisation.

14. Procédé selon l'une des revendications 7 à 13, dans lequel le modèle de commande et/ou de régulation et/ou le modèle de surveillance sont appris en se basant sur un réseau neuronal, en particulier un réseau neuronal récurrent.

15. Procédé selon l'une des revendications précédentes, dans lequel la sélection ou la pondération des jeux de données issus des données d'apprentissage (TD) s'effectuent par le biais d'une fonction dépendante du degré de confiance (CM) et de l'erreur de modèle (ME).

16. Procédé selon l'une des revendications précédentes, dans lequel les jeux de données issus des données d'apprentissage sont sélectionnés de telle sorte qu'ils sont extraits pour l'étape d'itération suivante en se basant sur les probabilités associées aux jeux de données au moyen d'un échantillon.

17. Procédé selon l'une des revendications précédentes, dans lequel des poids (w1, w2, ..., wN) sont associés aux jeux de données issus des données d'apprentissage (TD), lesquels sont pris en compte lors de l'apprentissage de l'estimateur de densité (DE) et du modèle piloté par des données (NM), dans lequel les poids (w1, w2, ..., wN) sont actualisés au moyen de l'estimateur de densité (DE) et du modèle piloté par des données (NM), qui ont été appris lors d'une étape d'itération respective, de telle sorte que des jeux de données issus des données d'apprentissage (TD) reçoivent des poids plus élevés avec des degrés de confiance (CM) bas et des erreurs de modèle (ME) élevées.

18. Procédé selon la revendication 17, dans lequel les poids (w) représentent des probabilités, lesquelles sont traitées par le biais de l'estimateur de densité (DE) et du modèle piloté par des données (NM).

19. Procédé selon la revendication 18, dans lequel des jeux de données issus des données d'apprentissage (TD) sont sélectionnés par le biais de l'estimateur de densité (DE) et/ou du modèle piloté par des données (NM) en se basant sur les probabilités pour l'apprentissage ou dans le cadre de l'apprentissage.

20. Procédé selon l'une des revendications précédentes, dans lequel le procédé est initialisé avec une quantité partielle (RD) de jeux de données issus des données d'apprentissage (TD), laquelle est fixée en particulier de manière aléatoire, ou avec tous les jeux de données issus des données d'apprentissage (TD) avec des poids initiaux (w).

21. Procédé selon l'une des revendications précédentes, dans lequel l'estimateur de densité (DE) se base sur un algorithme à nuages de neurones.

22. Procédé selon l'une des revendications précédentes, dans lequel l'itération est terminée lorsque au moins une part prédéterminée des erreurs de modèle (ME) des jeux de données sélectionnés ou pondérés pour l'étape d'itération suivante se trouve en dessous d'un seuil prédéterminé et/ou lorsque au moins une part prédéterminée des degrés de confiance (CM) des jeux de données sélectionnés ou pondérés pour l'étape d'itération suivante se trouve au-dessus d'un seuil prédéfini.

23. Procédé destiné au fonctionnement d'un système technique, dans lequel un modèle piloté par des données est généré avec un procédé selon l'une des revendications précédentes et est ensuite mis en oeuvre pour l'analyse et/ou l'influence du fonctionnement du système technique.

24. Procédé selon la revendication 23 en combinaison avec l'une des revendications 7 à 14, dans lequel le système technique est régulé et/ou commandé et/ou surveillé avec le modèle de commande et/ou de régulation et/ou le modèle de surveillance.

25. Produit de programme informatique avec un code de programme enregistré sur un support lisible sur une machine destiné à la réalisation d'un procédé selon l'une des revendications précédentes lorsque le code de programme est exécuté sur un ordinateur.
